# EUROPEAN PATENT SPECIFICATION

(11) **EP 4 447 705 B1**
(45) Date of publication and mention of the grant of the patent: **22.04.2026**
(21) Application number: 17718127.8
(22) Date of filing: 21.03.2017
(51) Int. Cl.: A23L 2/38, A23L 2/52, A23L 2/72, A23L 25/00

(54) **PRODUCTION OF ADDITIVE FREE HAZELNUT BEVERAGE**
HERSTELLUNG VON ZUSATZFREIEN HASELNUSSGETRÄNKE
PRÉPARATION DE BOISSON DES NOISETTES SANS ADDITIF

(30) Priority: 21.03.2016 TR 201603611
(43) Date of publication of application: 23.10.2024
(73) Proprietor: Tubitak, 06100 Ankara (TR)
(72) Inventor: ÖZTÜRK, Tarik, 41470 Kocaeli (TR); ÖZTÜRK, Bengü, 41470 Kocaeli (TR); SEYHAN, Ferda, 41470 Kocaeli (TR); BORCAKLI, Mehlika, 41470 Kocaeli (TR)
(86) International application number: PCT/IB2017/051627
(87) International publication number: WO 2017/163178

(56) References cited:
- EP-A1- 2 342 980
- EP-A1- 2 749 180
- ANONYMOUS: "GNPD - Hazelnut Drink", 31 August 2015 (2015-08-31), XP055379715, Retrieved from the Internet <URL:http://www.gnpd.com/sinatra/recordpage/3372623/from_search/rZLVsJi2nD/?page=2> [retrieved on 20170608]
- ANONYMOUS: "GNPD - Hazelnut Drink", 30 June 2009 (2009-06-30), XP055379729, Retrieved from the Internet <URL:http://www.gnpd.com/sinatra/recordpage/1098148/from_search/rZLVsJi2nD/?page=5> [retrieved on 20170608]
- ANONYMOUS: "GNPD - Hazelnut Vegetable Drink", 31 October 2007 (2007-10-31), XP055379745, Retrieved from the Internet <URL:http://www.gnpd.com/sinatra/recordpage/787486/from_search/4nIjxZ8Tq8/?page=1> [retrieved on 20170608]

## Description

### 1. Technical Field Relating to the Invention

The topic of this invention is the production method of food additive-free stable hazelnut beverage solely made of hazelnut and water.

### 2. Prior Art

Hazelnut is a preferred food by humans for many years because of its health benefits and superior flavour properties. Hazelnuts can be consumed as snacks, hazelnut paste, or hazelnut milk. The demand for hazelnut beverages has increased in recent years. Hazelnut products, such as mixed forms of hazelnut with various plants and hazelnut milk made with various stabilizers, are being developed and patented.

The major disadvantage of hazelnut beverages is the difficulty of preserving their stability against the thermal processing and storage conditions. Thus, it has been mandatory to use food additives in hazelnut beverage formulations. These additives are mostly in the group of thickening agents, emulsifiers, and acidity regulators. Food additives affect consumer preference of the product. Therefore, a product that does not contain additives has significant economic advantages.

Eleven patents have been found related to hazelnut beverage preparation.

Patent ES-A-360032 provides for the production of sterilisable nut milk through the grinding of nuts into a powder form of less than a size of 10 microns, and use of water and pectin as stabilizer.

Patent ES-A-2116916 especially covers the production of beverages from almonds. In this patent, almonds are kept in water with added sweeteners and then homogenized to obtain a paste. It is possible to obtain a beverage by only adding water or stabilizer added water to the paste. Because the centrifugation step is not included in the mentioned process in the Patent ES-A-2116916, sediment is expected in the package. Besides, the beverage in the aforementioned patent is obtained from almonds, which give more stable milk compared to hazelnuts.

Patent ES-A-2095806 is about the production of an almond beverage, which has water activity greater than 0.75. In this patent, almonds and water are ground together and resulting mixture is centrifuged to remove the insoluble particles. Sweetener and emulsifiers are added into the obtained supernatant and then pH is adjusted. In this patent, an emulsifier is used as additive and also, the beverage in this patent is produced from almonds rather than hazelnuts.

In the Patent ES 2040654, some of the nuts are defatted and milk is obtained by grinding the defatted nuts and non-defatted nuts with water in a colloidal mill. The obtained milk is concentrated and preferably dried. Dry powder is produced by this method. In this method, the centrifugation step is not included and powder is produced rather than a stable beverage.

In the patents CN-A-1559304, CN-A-1209303 and CN-A-1063207, nuts are initially soaked in water and centrifugation step is not performed.

In Patent EP 2342980, nuts are ground with water at 75-90°C, and the milled mixture is homogenized in a homogenizer after addition of an emulsifier. The homogenized mixture is centrifuged, the pH of the supernatant is adjusted, and then packaged after **UHT** sterilization.

In the Patent CN1709162 and US5656321, nuts are defatted and additives such as acidity regulators and thickening agents are added into the beverage.

In Patent GB2413932A, almonds are partially defatted and ground to a paste in dry form, followed by preferably mixing of additives into this paste to obtain an almond beverage. Furthermore, this patent does not have the additional heat treatment and centrifugation steps in order to provide stability, heat treatment is only suggested to provide microbial stability. Acidity regulator and emulsifier are added into the aforementioned product. The applied thermal treatment is not over 100°C under pressure, but at 75-90 °C.

The patent EP2749180 relates to a method for obtaining a soy based liquid food product comprising cocoa and hazelnut and the liquid food product obtained by preparing a mixture with the following ingredients whole deshelled soy, water, and dry marine alga as a stabilizer, grinding the dry marine alga and the soy while preparing the mixture, with a controlled heat supply for their activation, so that said mixture produces a fluid paste from which, by centrifugation, a liquid part providing said food product is separated.

Also in the prior art, there are some hazelnut drinks with organic products made with agave syrup launched by different companies. These products do not contain additives and colourants, and they are lactose free, cholesterol free, gluten free and rich in monounsaturated fatty acids

### 3. Technical Problem that the Invention Aims to Solve

Hazelnut beverages are not able to protect their stability when they are exposed to heat treatment and it is not possible to produce additive free stable hazelnut beverage with long shelf-life. Stable hazelnut beverages free of food additives, consisting of only hazelnuts and water is produced via the processing steps included in this patent. Produced hazelnut milk is exposed to high temperature under pressure for a short time and substances that disrupt the stability are removed to ensure the stability of the hazelnut milk. Besides being additive-free, this hazelnut beverage also can have a special flavour due to the treatment above 100 °C with added sugar.

### 4. Disclosure of Invention

The invention comprises the following steps:
1) grinding of natural (non-heat treated) hazelnut kernels and water together in a bladed grinder at room temperature,
2) removing sediments by filtering through a sieve with a mesh size of 0.5 mm,
3) cooking of filtrate in a pressurized cooking vessel at 110-150°C, preferably at 120°C, for 1 second to 20 minutes and preferably for 5 minutes,
4) removal of sediments by a centrifuge formed after cooking,
If necessary, sterilization of the vessel-cooked product, followed by aseptic packaging.

At the first step hazelnuts have to be natural. The reason for the preference of natural hazelnuts is that, they form more sediment by heat treatment and the final product is more stable, and also, the usage of natural hazelnuts enables the perception of specific aroma and taste.

It is also possible to use roasted hazelnuts to obtain different aroma and taste. It is also possible to use grains, legumes, and other nuts beside hazelnuts to obtain different tastes or modify nutritive value. It is also appropriate to use any different grinder with sufficient crushing power instead of bladed grinder at this step.

The filtration process in the second step is performed smoothly with a sieve containing holes of 0.5 mm diameter. It is also appropriate to change the sieve diameter or use a centrifuge instead of filtration.

Cooking in pressurized chamber in the third step enables the non-use of food additives. High temperature and pressure precipitate substances that may disrupt the stability of the hazelnut beverage and inactivate enzymes in hazelnut.

Thermal treatment (preferably at 120° C for 15 minutes) would also prevent rancidity resulting from lipase enzyme activity and prevents undesired effects on the product flavour.

Additives are mandatory when this process is not performed over 100°C and under pressure, as the stability of the product is disrupted and phase separation is observed.

In the fourth step, sediments are removed by centrifugation; however, it is also possible to use filtration instead of centrifugation.

After the fourth step, sucrose can be added into the mixture that has been cleared of sediments. Other carbohydrate based sweeteners (glucose syrup, fructose containing glucose syrup, fructose syrup) or different mixtures containing honey or molasses can be used at different ratios at this step to sweeten the mixture.

Alternative sweeteners (high intensity sweeteners or sugar alcohols) cannot be used alone as an alternative, since the flavour compounds that form under pressure in the presence of mono and disaccharides give the characteristic taste to the beverage. Sugar and hazelnuts interact and special flavour of the drink forms after this process. **The** intensity of this flavour is adjusted by temperature and time.

A further sterilization step is not required if a pressurized thermal treatment at 121°C for 15 minutes is preferred. However, the product will have a shorter shelf-life if it is produced at lower temperatures and in shorter time. Sterilization step is necessary to store the product for a long time at room temperature. **The** aroma of the product has to be adjusted by taking this further thermal treatment step into account.

Although it is desired that this product is additive free, the enrichment of this product with bioactive substances such as vitamins and minerals are also within the scope of this patent. **It** is possible that when the sugar is added it can be partly replaced by alternative sweeteners to decrease caloric value of this beverage. **It** is possible to produce additive free hazelnut beverage with different tastes either using alternative sweeteners (high intensity sweeteners or sugar alcohols) or without adding any sweeteners. Although the flavour of such a beverage is different than the flavour of the beverage described in this patent, it is still within the scope of this patent.

Although this beverage is intended for direct consumption, it can be used as an ingredient for other food products such as liquor, pudding, pastry cream or coffee due to its special aroma. Although the production process is described as batch production, continuous production process can also be used. Although the preferred hazelnut kernel to water ratio is 1:12, this ratio can be more or less than 1:12. Although the use of a single hazelnut variety is preferred at the production, the use of more than one hazelnut variety is also within the scope of this patent. It is possible to add different food (other nuts, grains, legumes, etc.) or aroma substances (cocoa, coffee, vanilla, etc.) to this beverage.

### 5. Manner of Industrial Applicability of the Invention

All food processing equipment that are utilized for industrial application of the invention are available on the market, and the processes described in this patent can easily be transferred to the industry.

## Claims

1. A beverage preparation method comprising the following the steps:
a. Grinding of natural hazelnut kernels and water together in a bladed grinder at room temperature,
b. Removing sediments by filtering through a sieve with a mesh size of 0.5 mm,
c. Cooking of filtrate in a pressurized cooking vessel at 110-150°C, for 1 second to 20 minutes,
d. Removal of sediments by a centrifuge formed after cooking.

2. A beverage preparation method according to claim 1, wherein the heat treatment in step c is applied at 120° C for five minutes.

3. A beverage preparation method according to claim 1, further comprising the step of adding glucose or fructose containing substances to the sediment-free liquid obtained in step (d.).

4. A beverage preparation method according to claim 3, wherein the glucose or fructose containing substances are selected from the group comprising glucose syrup, fructose containing glucose syrup, fructose syrup, or natural products such as honey or molasses containing glucose syrup, glucose syrup containing fructose or fructose syrup.

5. A beverage preparation method according to claim 3, wherein the glucose or fructose containing substance is sucrose.

6. A beverage preparation method according to claim 3, further comprising the step of packaging of sugar-containing liquid.

7. A beverage preparation method according to claim 3, wherein sugar-containing liquid is cooked optionally in the cooking vessel or in the package at 110-150°C until desired aroma has formed.

8. A beverage preparation method according to claim 6, wherein the packaged sugar-containing liquid is optionally cooked in the package at 110-150°C until desired aroma has formed and pasteurized or sterilized beverage is obtained.

9. A beverage preparation method according to claim 7, further comprising an aseptic filling which is conducted after cooking of the sugar-containing liquid.

10. A beverage preparation method according to claim 7, wherein a self-specific aroma is obtained by treating hazelnut and fructose or glucose in a liquid matrix at under heat and pressure.

11. A beverage preparation method according to claim 1, wherein additional water is added in any step.

12. A beverage preparation method according to claim 1, further comprising addition of various bioactive substances including vitamins or minerals for enrichment purposes.

13. A beverage preparation method according to claim 1, further comprising addition of substances including vanilla, cocoa, or coffee to obtain a different taste and aroma.

## Patentansprüche

1. Verfahren zur Herstellung eines Getränks, das die folgenden Schritte umfasst:
a. Zermahlen von natürlichen Haselnusskernen und Wasser in einer Klingenmühle bei Raumtemperatur,
b. Entfernen von Sedimenten durch Filtration durch ein Sieb mit einer Maschenweite von 0,5 mm,
c. Kochen des Filtrats in einem Druckkochgefäß bei 110-150 °C, 1 Sekunde bis 20 Minuten lang,
d. Entfernen von nach dem Kochen entstandenen Sedimenten mittels einer Zentrifuge.

2. Verfahren zur Herstellung eines Getränks nach Anspruch 1, wobei die Wärmebehandlung in Schritt c fünf Minuten lang bei 120 °C durchgeführt wird.

3. Verfahren zur Herstellung eines Getränks nach Anspruch 1, das ferner den Schritt der Zugabe von Glucose- oder fructosehaltigen Substanzen zu der in Schritt (d.) erhaltenen sedimentfreien Flüssigkeit umfasst.

4. Verfahren zur Herstellung eines Getränks nach Anspruch 3, wobei die Glucose- oder fructosehaltigen Substanzen aus der Gruppe ausgewählt sind, die Glucosesirup, fructosehaltigen Glucosesirup, Fructosesirup oder natürliche Produkte wie Honig oder Melasse, die Glucosesirup, fructosehaltigen Glucosesirup oder Fructosesirup enthalten, umfasst.

5. Verfahren zur Herstellung eines Getränks nach Anspruch 3, wobei die Glucose- oder fructosehaltige Substanz Saccharose ist.

6. Verfahren zur Herstellung eines Getränks nach Anspruch 3, das außerdem den Schritt des Verpackens der zuckerhaltigen Flüssigkeit umfasst.

7. Verfahren zur Herstellung eines Getränks nach Anspruch 3, wobei die zuckerhaltige Flüssigkeit wahlweise im Kochgefäß oder in der Verpackung bei 110-150 °C gekocht wird, bis sich das gewünschte Aroma gebildet hat.

8. Verfahren zur Herstellung eines Getränks nach Anspruch 6, wobei die verpackte zuckerhaltige Flüssigkeit in der Verpackung bei 110-150 °C wahlweise gekocht wird, bis sich das gewünschte Aroma gebildet hat und ein pasteurisiertes oder sterilisiertes Getränk erhalten wird.

9. Verfahren zur Herstellung eines Getränks nach Anspruch 7, das ferner eine aseptische Abfüllung umfasst, die nach dem Kochen der zuckerhaltigen Flüssigkeit durchgeführt wird.

10. Verfahren zur Herstellung eines Getränks nach Anspruch 7, wobei durch Behandlung von Haselnuss und Fruktose oder Glukose in einer flüssigen Matrix unter Hitze und Druck ein charakteristisches Aroma erhalten wird.

11. Verfahren zur Herstellung eines Getränks nach Anspruch 1, wobei in einem beliebigen Schritt zusätzliches Wasser zugegeben wird.

12. Verfahren zur Herstellung eines Getränks nach Anspruch 1, das ferner die Zugabe verschiedener bioaktiver Substanzen, einschließlich Vitaminen oder Mineralien, zur Anreicherung umfasst.

13. Verfahren zur Herstellung eines Getränks nach Anspruch 1, das ferner die Zugabe von Substanzen wie Vanille, Kakao oder Kaffee umfasst, um einen anderen Geschmack und ein anderes Aroma zu erhalten.

## Revendications

1. Un procédé de préparation de boisson comprenant les étapes suivantes :
a. Broyer les noyaux de noisettes naturelles et l'eau ensemble dans un broyeur à lames à température ambiante,
b. Enlever les sédiments en les filtrant à travers un tamis dont les mailles ont une taille de 0,5 mm,
c. Cuire le filtrat dans un récipient de cuisson sous pression à une température comprise entre 110 et 150 °C, pendant une durée comprise entre 1 seconde et 20 minutes,
d. Enlever les sédiments formés après la cuisson à l'aide d'une centrifugeuse.

2. Un procédé de préparation de boisson selon la revendication 1, dans laquelle le traitement thermique de l'étape c est appliqué à 120 °C pendant cinq minutes.

3. Un procédé de préparation de boisson selon la revendication 1, comprenant en outre l'étape consistant à ajouter des substances contenant du glucose ou du fructose au liquide exempt de sédiments obtenu à l'étape (d.).

4. Un procédé de préparation de boisson selon la revendication 3, dans laquelle les substances contenant du glucose ou du fructose sont choisies parmi le groupe comprenant le sirop de glucose, le sirop de glucose contenant du fructose, le sirop de fructose ou des produits naturels tels que le miel ou la mélasse contenant du sirop de glucose, le sirop de glucose contenant du fructose ou le sirop de fructose.

5. Un procédé de préparation de boisson selon la revendication 3, dans laquelle la substance contenant du glucose ou du fructose est le saccharose.

6. Un procédé de préparation de boisson selon la revendication 3, comprenant en outre l'étape d'emballage d'un liquide contenant du sucre.

7. Un procédé de préparation de boisson selon la revendication 3, dans laquelle le liquide contenant du sucre est cuit facultativement dans le récipient de cuisson ou dans l'emballage à une température comprise entre 110 et 150 °C jusqu'à ce que l'arôme souhaité se soit formé.

8. Un procédé de préparation de boisson selon la revendication 6, dans laquelle le liquide contenant du sucre emballé est facultativement cuit dans l'emballage à une température comprise entre 110 et 150 °C jusqu'à ce que l'arôme souhaité se soit formé et que l'on obtienne une boisson pasteurisée ou stérilisée.

9. Un procédé de préparation de boisson selon la revendication 7, comprenant en outre un remplissage aseptique qui est effectué après la cuisson du liquide contenant du sucre.

10. Un procédé de préparation de boisson selon la revendication 7, dans laquelle un arôme spécifique est obtenu en traitant des noisettes et du fructose ou du glucose dans une matrice liquide sous chaleur et pression.

11. Un procédé de préparation de boisson selon la revendication 1, dans laquelle de l'eau supplémentaire est ajoutée à n'importe quelle étape.

12. Un procédé de préparation de boisson selon la revendication 1, comprenant en outre l'ajout de diverses substances bioactives, notamment des vitamines ou des minéraux, à des fins d'enrichissement.

13. Un procédé de préparation de boisson selon la revendication 1, comprenant en outre l'ajout de substances telles que la vanille, le cacao ou le café afin d'obtenir un goût et un arôme différents.
